# EUROPEAN PATENT SPECIFICATION

(11) **EP 2 148 559 B1**
(45) Date of publication and mention of the grant of the patent: **29.12.2010**
(21) Application number: 08707724.4
(22) Date of filing: 15.02.2008
(51) Int. Cl.: A01D 34/135

(54) **CUTTING TOOL FOR CUTTING STALKS**
SCHNEIDWERK ZUM ABSCHNEIDEN VON STÄNGELN
OUTIL DE COUPE DESTINÉ À COUPER DES TIGES

(30) Priority: 17.02.2007 DE 102007007985
(43) Date of publication of application: 03.02.2010
(73) Proprietor: ESM Ennepetaler Schneid- und Mähtechnik Gmbh & Co. KG, 58256 Ennepetal (DE)
(72) Inventor: VAN TICHELEN, Jean Claude, Anerley 4230 (ZA); OEHLER, Wolfgang, 51688 Wipperfürth (DE); JAKOBS, Helmut, 42499 Hücheswagen (DE)
(74) Representative: Rehberg Hüppe + Partner
(86) International application number: PCT/EP2008/001141
(87) International publication number: WO 2008/098769

(56) References cited:
- EP-A- 1 125 490
- DE-A1- 2 527 266
- DE-A1- 4 035 528
- DE-U1- 29 504 346

## Description

This application claims priority to co-pending German Patent Application No. DE 102007007985.2 entitled "Schneidwerk zum Abschneiden von stängeligem Schnittgut", filed February 17, 2007.

The present invention generally relates to a cutting tool for cutting plants including stalks.

Such plants including stalks are to be understood as substantially upright growing plants being made of a comparatively hard and fibrous material. Especially, such plants are cane, corn and the like. After cutting such plants, rigid remainders of the stalks remain located on the ground.

A cutting tool for cutting material to be cut, especially grass or crop, is known from ***German Patent No.*** DE 40 35 528 C2. The known cutting tool includes a bar extending over the working width of the cutting tool. The bar is supported on a supporting element such as a carrier or a plate via which the cutting tool is suspended at a frame of a vehicle, for example a single-axle tool. A knives set including an upper knife and a lower knife is movably supported on the bar. The upper knife and the lower knife each include blades which are driven by driving elements to reciprocate in opposite directions in a cutting portion. The upper knife and the lower knife are movably supported on the bar by guiding elements. The bar, the connecting element, the driving elements and the guiding elements extend partly above and partly below the knife set including the upper knife and the lower knife. Sliding shoes being located in the center portion and/or in the outer portions of the bar serve to maintain a constant distance of the knives set with its cutting portion with respect to the ground during operation of the known cutting tool.

Similar cutting tools are also known from ***German Patent No.*** DE 29 22 579 C2 corresponding to US Patent No. US 4,418,520 and from ***German Patent No.*** DE 3102 861 C2. The arrangement of the guiding elements with respect to the knives set is to be seen from these prior art references. The known cutting tools are used for cutting material to be cut including stalks such as grass, clover, corn, and the like.

A harvesting machine for cutting cane including a plurality of cutting tools is known from ***German Patent Application No.*** DE 36 31889 A1. The cutting tools either serve for cutting the foliage or for cutting the stalks. The cutting tool for cutting the stalks of the cane includes rotatingly driven cooperating pairs of cutting discs.

A knife holder which is designed to be openable to easily replace the upper knife is known from ***German Patent Application No.*** DE 25 27 266 A1*.* Replacing the upper knife does not take place in the working position, but in a maintenance position of the cutting tool. The cutting tool includes a bar being supported on a connecting element of the machine and extending over the working width of the cutting tool. A knives set including an upper knife and a lower knife is supported on the bar, the blades being driven to reciprocate in opposite directions. The prior art reference does not contain any disclosure concerning the kind of the drive and the design of the driving elements for the upper knife and the lower knife. The upper knife is supported on the bar by the openable knife holders which act as guiding elements. The lower knife is also supported from below by a lower guiding element. The lower guiding element fulfills the function of guiding elements for the lower knife. The lower guiding element serving to guide the lower knife extends from the cutting portion of the knives set of the cutting tool in a way to protrude in a downward direction. Furthermore, locking screws for adjusting the openable knife holder are provided. There is no free space not including connecting elements, driving elements or guiding elements below the cutting portion of the knives set.

A cutting tool for cutting grass and other plants is known from ***US Patent No.*** US 3,538,690*.* The known cutting tool includes a bar extending over the working width, a knives set including an upper knife and a lower knife being supported on the bar. The upper knife as well as the lower knife includes blades being driven to reciprocate in a cutting portion. The upper knife and the lower knife have an L-shaped angled design. The upper knife and the lower knife with the angled portions are resiliently suspended in rubber bearings, a plurality of rubber bearings being arranged to extend over the working width. The upper knife and the lower knife are arranged to be horizontal such that the cutting portion of the knives is located at a higher place than the bottom surface of the lower knife. The L-shaped angled upper knife and lower knife may be arranged in different relations with respect to one another. In these different positions, the space below the cutting portion of the knives being arranged to be horizontal is either blocked or free.

A corn cutter including a cutting tool is known from ***German Patent No.*** DE 28 28 766 C2 corresponding to ***US Patent No.*** US 4,267,689. The known cutting tool includes a bar extending over the working width. The bar includes a knives set including an upper knife and a lower knife which are supported by guiding elements. The guiding elements for the upper knife and the lower knife extend into a space below the plane being formed by the upper knife and the lower knife. The prior art reference does not contain any indication with respect to relative positioning of the bar and the guiding elements or of the knives set. The knives set includes cutting portions and non-cutting portions being distributed over the working width.

A mowing tool including an upper knife and a lower knife is known from ***German Patent No.*** DE 11 76 415 B**.** When being used, the upper knife and the lower knife are arranged to be horizontal. The known mowing tool includes elements extending into the space below the horizontal plane of the knives set.

A mowing tool including an upper knife and a lower knife is known from ***German Patent No.*** DE 198 26 289 C1***.*** The upper knife and the lower knife each include a knife back and cutting elements being located on the knife back. The upper knife and/or the lower knife are driven to reciprocate. The cutting elements of the upper knife or of the lower knife are arranged at least with two different divisions on their respective knife back.

A front mowing tool being located on mowing shoes at the left hand side and at the right hand side is known from ***German Patent Application No.*** DE 27 16 482 A1. The mowing tool includes a bar on which an upper knife and a lower knife are located. The upper knife and the lower knife are supported by guiding elements being arranged in a spaced apart manner over the working width. The prior art reference does not show in detail how the guiding elements are connected to the lower knife. A cutting plane is formed between the upper knife and the lower knife, the cutting plane being arranged to be parallel to the ground.

A cutting tool for cutting plants including stalks includes a bar. The bar has a lower edge and is designed and arranged to substantially extend over a working width of the cutting tool. A knives set is being arranged on the bar. The knives set includes an upper knife unit and a lower knife unit. The upper knife unit includes a plurality of blades including a cutting portion. The upper knife unit is designed and arranged to be downwardly declined towards the cutting portion. The lower knife unit includes a plurality of blades including a cutting portion. The lower knife unit is designed and arranged to be downwardly declined towards the cutting portion. A plurality of driving elements having a lower edge is designed and arranged to drive the blades to reciprocate in opposite directions within a cutting region. A plurality of guiding elements is designed and arranged to connect the upper knife unit and the lower knife unit to the bar. The cutting portions of the blades of the upper knife unit and the lower knife unit in a working position of the cutting tool are located at least as low as the lower edge of the bar and the lower edge of the driving elements such that there is a free space being located within the cutting region. Preferably, the cutting portions of the blades of the upper knife unit and the lower knife unit in a working position of the cutting tool are located below the lower edge of the bar and the lower edge of the driving elements.

In the prior art, rotatingly driven cutting elements have been used for cutting plants including stalks, especially cane. Such known cutting tools have the drawback that the remaining part of the stalk protruding from the ground has a cut surface which is not flat, but instead uneven and fibrous. As a result, a plurality of stalks grows later starts growing in that uneven surface. This is not desired.

When using cutting tools including a knives set including an upper knife and a lower knife which are driven to reciprocate, one may attain a comparatively smooth cut surface when cutting cane. However, the remainders of the stalks or stems located on the ground and protruding in an upward direction are inflexible and unbendable such that the cutting tool contacting these stalks is deflected and moved, respectively, in an upward direction. Consequently, the knives set including the upper knife and the lower knife continuously reaches a higher position with respect to the ground such that the height of the remaining stalks continuously increases, especially when the stalks grow close to one another in the direction in which the cutting tool is moved. Additionally, it needs to be taken into account that the plants may have their greatest diameter at that location and that it may be difficult to cut such a great diameter. The diameter may be in a region of approximately 50 mm or even more. A major reason for the undesired deflection and displacement, respectively, of the knives set in the prior art and the step-like cut resulting therefrom (while there is an increase of the height of the parts of the stalks remaining on the ground) is the relative arrangement of the bar at the known cutting tools as they are used for cutting grass, crop and other flexible material to be cut.

With the novel cutting tool, it is possible to cut material to be cut such as plants including stalks, especially cane, corn and the like, close to the ground and at a constant distance from the ground while the cut surfaces are clean and smooth. In the novel cutting tool, the cutting portions of the blades of the knives set are located at least as low as the lower edge of the bar in the working position of the cutting tool. The cutting portions of the blades of the knives set are to be understood as the parts and sections, respectively, of the blades of the upper knife and of the lower knife which realize the cut at the material to be cut due to their reciprocating movement in opposite directions. Usually, these cutting portions of the blades of the knives set are located approximately in the first third of the front of the blades.

The bar extends over the working width of the cutting tool. Due to the arrangement of the cutting portions of the blades of the knives set below the lower edge of the bar, the above described deflecting effect and the harvest losses resulting therefrom in the prior art are prevented. The relative arrangement may be determined by the design and arrangement of the respective elements, especially the bar, with respect to the knives set. The angle of declination of the blades of the knives set with respect to the horizontal ground also has a positive effect. The knives set is designed and arranged to be downwardly declined towards the front in the working position. In this way, the free space attained below the bar is further increased.

The free space is a space below the cutting region of the knives set of the cutting tool. No connecting elements, driving elements, guiding elements or other elements are located in this free space. The cutting region of the knives set of the cutting tool is to be understood as the width of the cutting tool perpendicular to the working direction in which actual cutting of the material to be cut including stalks is realized, meaning in which the cutting tool fulfills its cutting function. No connecting elements, driving elements or guiding elements are located in the cutting portion of the knives set of the cutting tool such that this space remains free from the above described elements and such that the cutting tool does not contact the remaining stalks of the cut material, and the cutting tool is not dislocated in an upward direction. The connecting units serving to connect the cutting tool with a frame of a vehicle or of a chassis usually are located in the center region, meaning symmetric with respect to the vertical longitudinal plane of the cutting tool. For example, they may be made of a connecting plate or a connecting carrier. In this way, this connecting unit is located at a place at which most of the stalks to be cut are located during operation of the cutting tool. The described relative arrangement also applies to the driving elements for the upper knife unit and the lower knife unit at least when these driving elements are located in a center portion. When using an outer drive, the relative arrangement is of no importance or only of less importance.

Due to the fact that the guiding elements are also not located in the region of the free space, the novel cutting tool is guided on the ground at a constant distance without getting dislocated by the remainders of the stalks during harvesting. At the same time, the quality of the cut surfaces is improved, meaning one attains a smooth horizontal cut surface since the blades operate in accordance with the scissors principle, and there is no plucking or ripping movement acting upon the material to be cut. Thus, the forces acting upon the blades are reduced and one attains a positive effect concerning durability and usable lifetime of the blades of the knives set.

Preferably, the blades of the upper knife unit and of the lower knife unit are arranged at different divisions such that one attains a preferably great supporting surface between the blades of the upper knife unit and the blades of the lower knife unit during cutting. In this way, one counteracts the effect of the blades - in case they were located at the same division - entering the cutting gaps between the respective other knife unit. Such an effect would lead to a disadvantageous vibrating movement, on the one hand, and to increased wear and tear of the blades, on the other hand. The variation of the divisions of the blades results in a substantial improvement.

The upper knife unit and the lower knife unit of the knives set have a width extending over the working width of the cutting tool. This width is greater than the usable width, meaning the cutting region of the knives set in which actual cutting of the material to be cut takes place. Two guiding portions are located at both outer sides of the central cutting region of the knives set such that the sum of these portions corresponds to the total width of the upper knife unit and of the lower knife unit. The widths of these guiding portions in which cutting does not take place is defined by leading and feeding elements. These leading and feeding elements may especially be designed as guiding straps acting upon the material to be cut before the knives set such that the material to be cut is introduced into the cutting region of the knives set by being slightly bent. On the other hand, these guiding straps result in alignment of the cutting tool and of the machine supporting the cutting tool with respect to the rows of plants to be cut. Due to these guiding straps or other leading and feeding elements, it is ensured that the guiding portions being formed in this way can be used for arrangement of driving elements and guiding elements being arranged at least partly below the horizontal plane being defined by the cutting portion of the knives set. In this way, the guiding elements may be arranged in the guiding portions, and they can fulfill their function at that place without problems. This also applies to sliding shoes, sliding soles, and the like, by which one maintains a constant distance between the ground and the knives set.

The blades of the upper knife unit and of the lower knife unit of the knives set may be arranged such that there is a respective pressing force pressing them towards one another. This results in the cutting portions being located as close as possible to a common plane to effectively conduct a scissors-like cutting movement. In known cutting tools, this pressing force is substantially supplied by the force of attack and by the pressing force, respectively, of the supporting elements onto the upper knife unit and the lower knife unit. Since this pressing force is always active, meaning also when there is a gap between the plants to be cut, one attains comparatively great wear and tear. In the novel cutting tool, the pressing force being supplied by the supporting elements is substantially reduced or even fully eliminated. The blades are pressed towards one another by the cutting facets which are arranged to be respectively declined such that the blades are only pressed towards one another when the blades actually cut. Furthermore, this only applies to the locations of the knives set where a stalk is actually being cut. This feature results in a substantial reduction of wear and tear of the blades of the knives set and thus a respective increase of the durability and lifetime of important elements of the novel cutting tool. However, it is also possible to only arrange the declined cutting facets at the upper knife or at the lower knife, while the respective other knife does not include such cutting facets. In case cutting facets are located at the upper knife and at the lower knife, they preferably are arranged to be opposite. The angle of declination is coordinated for determining the pressing force. However, it is to be understood that the knives do not necessarily need to include such declines facets.

The blades of the upper knife and/or of the lower knife of the knives set may be designed to include teeth. This means that the cutting facets are toothed. The use of such a toothed design especially makes sense when using different divisions to prevent the cutting portions of the blades from hitting one another, penetrating into one another or a different negative effect acting upon them, and to reduce such effects, respectively. On the other hand, such a toothed blade is better suitable for cutting very hard fibrous material to be cut as this is the case with cane compared to a straight continuous blade. The cutting tool may be operated at comparatively slow working velocities such that the cutting material including stalks may be engaged by the teeth of the blades to be held in place and then to be cut. Due to the toothed design of the cutting portions of the blades, one advantageously attains a great local surface pressure with respect to the surface of the stalk to be cut and thus easy penetration into the material to be cut.

The blades of the upper knife unit and/or the lower knife unit of the knives set may have such an outer shape that cutting wedges in a region of approximately 30° and less result. This applies to the usual size of blades of such cutting tools. Such cutting wedges are great enough to allow for stalks having a comparatively great diameter to enter into the cutting wedge. On the other hand, the mentioned region of the angle of the cutting wedges realizes self-locking effects. In this way, one prevents the hard stalk of the material to be cut from being pressed out off the cutting wedge towards the front when the upper knife and the lower knife move with respect to one another.

There are a number of different possibilities for realizing the blades of the upper knife and/or the lower knife of the knives set. Usually, the blades are designed as separate elements being connected to the respective knife back of the upper knife and/or of the lower knife, for example by rivets. However, it is also possible to design the blades of the upper knife and/or of the lower knife of the knives set and the respective knife back as one piece. For example, this may be realized by punching and following additional processing steps.

The driving elements and the supporting elements for the knife back of the lower knife may especially be arranged higher than the cutting portion of the blades of the knives set in the working position of the cutting tool. In this way, the arrangement of the driving elements and of the supporting elements does not have a negative effect.

The bar may be supported on the sliding shoes being supported on the ground, the sliding shoes being located in the guiding portions of the knives set. The cutting region of the knives set thus does not include such sliding shoes. Such a sliding shoe is also not located in the center region of the knives set.

The two guiding portions of the knives set being located at both outer sides of the cutting region of the knives set may be used for arrangement of guiding elements and also for the arrangement of driving elements, for example an outer drive. It is advantageous if the two guiding portions of the knives set each include three guiding elements of which two are associated with the upper knife unit and one is associated with the lower knife unit or vice versa. These guiding elements are arranged on the bar such that the cutting region of the knives set of the cutting tool is maintained in the clamped position. In this way, deflection of the upper knife and of the lower knife in the cutting portion of the knives set is especially counteracted.

Advantageous developments of the invention result from the claims, the description and the drawings. The advantages of features and of combinations of a plurality of features mentioned at the beginning of the description only serve as examples and may be used alternatively or cumulatively without the necessity of embodiments according to the invention having to obtain these advantages. Further features may be taken from the drawings, in particular from the illustrated designs and the dimensions of a plurality of components with respect to one another as well as from their relative arrangement and their operative connection. The combination of features of different embodiments of the invention or of features of different claims independent of the chosen references of the claims is also possible, and it is motivated herewith. This also relates to features which are illustrated in separate drawings, or which are mentioned when describing them. These features may also be combined with features of different claims. Furthermore, it is possible that further embodiments of the invention do not have the features mentioned in the claims.

The invention can be better understood with reference to the following drawings. The components in the drawings are not necessarily to scale, emphasis instead being placed upon clearly illustrating the principles of the present invention. In the drawings, like reference numerals designate corresponding parts throughout the several views.
- **Fig. 1**: is a partially cut side view of a first exemplary embodiment of the novel cutting tool at the beginning of the process of cutting a first plant in a row.
- **Fig. 2**: is a partially cut side view of the novel cutting tool at the beginning of the process of cutting the following plant in the row.
- **Fig. 3**: is a partially cut side view of the novel cutting tool at the beginning of the process of cutting the third plant in the row.
- **Fig. 4**: is a detailed view of components of the cutting tool.
- **Fig. 5**: is a top view of the upper knife of the cutting tool according to Fig. 4.
- **Fig. 6**: is a top view of the lower knife of the cutting tool according to Fig. 4.
- **Fig. 7**: is a sectional view through the cutting tool of Fig. 4 according to line VII-VII.
- **Fig. 8**: is a sectional view through the cutting tool of Fig. 4 according to line VIII-VIII.
- **Fig. 9**: is a sectional view through the cutting tool of Fig. 4 according to line IX-IX.
- **Fig. 10**: is a sectional view through the cutting tool of Fig. 4 according to line X-X.
- **Fig. 11**: is a similar view as Fig. 7, but at an enlarged scale.
- **Fig. 12**: is a top view of the knives set including the upper knife and the lower knife.
- **Fig. 13**: is a top view of an upper knife being designed as one piece.

- **Fig. 14**: is a top view of the corresponding lower knife of the knives set of Fig. 12.

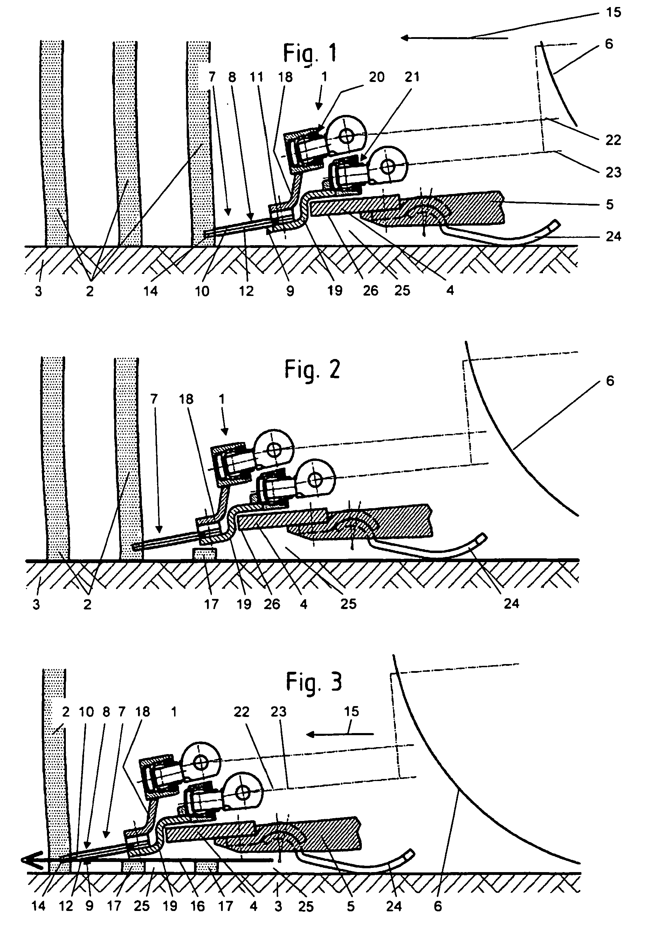

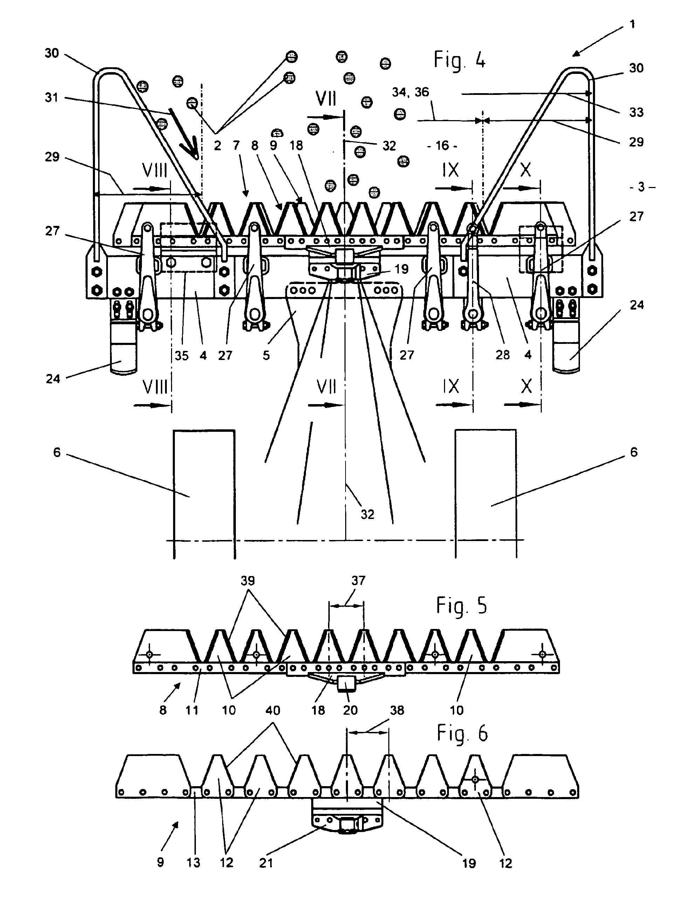

Fig. 1 is a sectional view and a side view, respectively, of components of a first exemplary embodiment of the novel cutting tool 1. The material to be cut 2 is illustrated as three schematically illustrated cane stalks growing on the ground 3. The cutting tool 1 includes a carrier or bar 4 serving as a carrying element and being designed and arranged to continuously extend over the working width of the cutting tool 1. The elements of the cutting tool 1 are located on the bar 4. The bar 4 in turn is connected to a frame (not illustrated) of a vehicle or a machine by a connecting unit 5 being designed as a connecting plate (also see Fig. 4). A part of a wheel 6 of the vehicle is schematically illustrated.

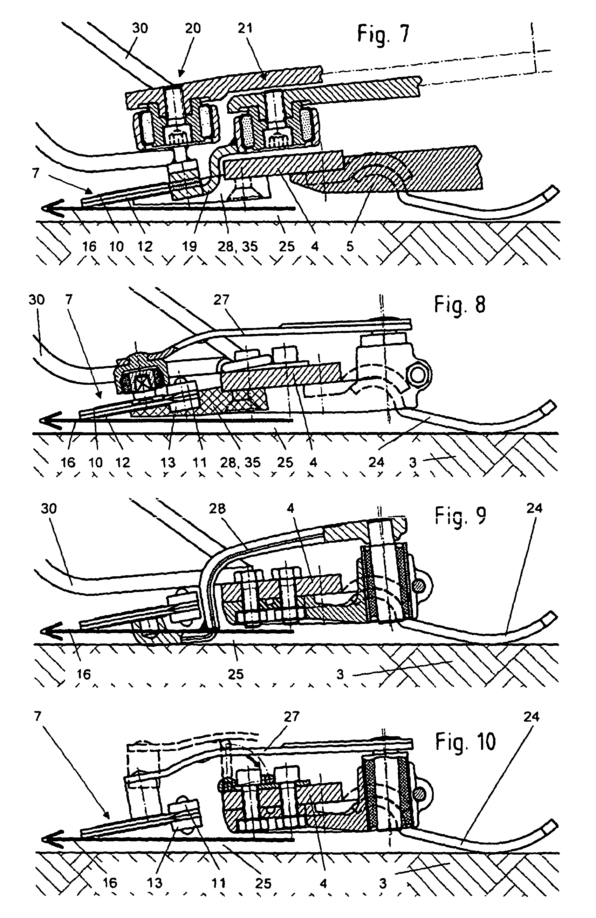

The cutting tool 1 further includes a knives set 7 including an upper knife unit 8 and a lower knife unit 9. The knife units 8 and 9 are also just called "knife 8" and "knife 9" herein. The upper knife 8 includes a plurality of blades 10 being arranged on a knife back or knife support 11 of the upper knife 8. The lower knife 9 also includes a plurality of blades 12 being located on a knife back or knife support 13. For reasons of clarity of the drawings, the knife back 13 is not illustrated in Fig. 1, but for example in Figs. 8-10. The blades 10 are located on top of the blades 12, and the blades 10, 12 all include a cutting portion 14 being located in their front part of their extension in the working direction according to arrow 15 (the left hand side in Fig. 1). The cutting portion 14 is to be understood as the portion of the blades 10 and 12 which actually cuts and with which the material to be cut 2 gets in contact and is cut thereby. The cutting portion 14 of the blades 10 and 12 of the knives set 7 when being moved in the direction of arrow 15 during continued cutting defines a horizontal plane 16 (Fig. 3) which is parallel to the surface of the ground 3. The material to be cut 2 is cut within the horizontal plane 16 such that the remainders of the stalks 17 all have approximately the same height corresponding to the approximately constant distance of the horizontal plane 16 to the surface of the ground 3. However, as it is to be seen in Figs. 1-3, the knives set 7, the knife units 8, 9, the blades 10, 12 and the cutting portions 14, respectively, are designed and arranged to be downwardly declined towards the front as seen in the direction of arrow 15. The series of Figs. 1-3 illustrates the continued cutting process of the material to be cut 2 in the working direction according to arrow 15.

As it is generally known in the field of cutting tools, the upper knife 8 and the lower knife 9 of the knives set 7 are driven to move back and forth in opposite directions with respect one another. For this purpose, there is a driving element 18 for the upper knife 8, the driving element 18 engaging the knife back 11 of the upper knife 8 in its center portion. A driving element 19 is associated with the lower knife 9, the driving element 19 being designed and arranged to protrude from above through a gap between the bar 4 and the knives set 7 in a downward direction and to be connected to the knife back 13 of the lower knife 9. The reciprocating drive of the upper knife 8 with the blades 10 and the lower knife 9 with the blades 12 is realized by joints 20 and 21 being located at respective pivot levers 22 and 23. The pivot levers 22 and 23 are only schematically illustrated in the drawings by the dash-dot lines, and they are connected to a drive of the vehicle. Glide shoes 24 are connected to the outer portions of the bar 4 (also see Fig. 4), the glide shoes 24 being supported on the ground 3 during operation of the cutting tool 1 such that the cutting tool 1 with its bar 4 is located at a constant height during cutting and thus at a constant distance from the surface of the ground 3.

It is already to be seen in Figs. 1-3 that a free space 25 is defined below the horizontal plane 16 being defined by the movement of the cutting portion 14 of the knives set 7. The free space 25 is free from any elements which could contact the remaining part of a stalk 17 after cutting. Consequently, an upward sliding movement of the cutting tool 1 on the remaining parts of the stalks 17 is effectively prevented. The bar 4 is located above the horizontal plane 16 such that its lower edge 26, meaning the lowermost location on the bar 4, is still located above the horizontal plane 16, meaning it does not protrude below the horizontal plane 16. The same applies to the driving elements, especially the driving element 19, as well as to the guiding elements 27 and 28 the design and relative arrangement of which will be further described with respect to Fig. 4. For reasons of clarity of the drawings, the guiding elements 27 and 28 are not illustrated in Figs. 1-3.

Fig. 4 illustrates a schematic top view of elements of the cutting tool 1. The material to be cut 2 is only schematically illustrated. The cutting tool 1 has a width 31 which substantially corresponds to the length of the continuous bar 4. The width 33 includes the working width 34 and two guiding p 29 each of which is located next to the working width 34 in an outward direction. The guiding portions 29 are defined by guiding straps 30 being located on the bar 4. The guiding straps 30 include repelling surfaces by means of which material to be cut 2 is repelled according to arrow 31 and is bent and deflected, respectively, from the guiding portions 29 into the region of the working width 34. Thus, the working width 34 also defines the width of a cutting region 36, meaning a strip having the width of the working width 34 in which cutting of the material to be cut 2 takes place. The guiding portions 29 being formed in this way are however portions in which cutting does not take place. The guiding portions 29 are used for arrangement of the guiding elements 27 and 28. It is to be seen in Figs. 4-6 that the design of the elements of the cutting tool 1 is chosen to be substantially symmetric with respect to the longitudinal center plane 32. Only for illustrating two embodiments in one drawing, the guiding elements 27 and 28 are illustrated to be different when comparing the left hand side of the drawing with the right hand side of the drawing. It is to be understood that the left hand side of the drawing illustrates a first exemplary embodiment which includes the same guiding elements 27 and 28 in a symmetrical arrangement at the other side. The same applies to the right hand side illustrating a second exemplary embodiment of the arrangement of the guiding elements 27 and 28.

The guiding elements 27 illustrated in Fig. 4 are associated with the upper knife 8, and they are connected to blades 10 of the upper knife 8. Their other end is supported in a pivot joint being located at the bar 4 such that the guiding elements 27 guide the upper knife 8 in a way to fulfill a reciprocating movement. The guiding elements 28 are associated with the lower knife 9. As is to be seen in Fig. 9, they extend through gaps between the bar 4 and the knives set 7 in a downward direction, and they contact the blades 12 of the lower knife 9 from below. As illustrated, the guiding elements 27 are partly located within the working width 34 and partly within the guiding portions 29. Due to the fact that they are located above the horizontal plane 16, they do not protrude into the free space 25 and thus cannot negatively influence cutting of the material to be cut 2. A different arrangement is chosen with respect to the guiding elements 28 being associated with the lower knife 9. In this case, the working width 34 is kept free from the guiding elements 28.

In the exemplary embodiment illustrated at the right hand side as seen from the longitudinal center plane 32, the guiding elements 27 and 28 are arranged such that the guiding element 28 for the lower knife 9 is located between the guiding elements 27 for the upper knife 8. Due to this spaced apart arrangement and distribution of the guiding elements 27 and 28, the knives set 7 including the upper knife 8 and the lower knife 9 is held in a clamped way such that deflections of the knives set 7 in the working width 34 are prevented. The exemplary embodiment being located on the left hand side as seen with respect to the longitudinal center plane 32 includes a plate-shaped friction bearing 35 fulfilling the function of the guiding element 28. Due to the strict linear guiding arrangement, the lower knife 9 is moved in a linear way while the upper knife 8 is guided by the guiding elements 27 on a circular arc.

It is to be seen especially in Figs. 5 and 6 that the upper knife 8 as well as the lower knife 9 includes portions which do not fulfill a cutting function. These portions are located within the guiding portions 29. Corresponding to the working width 34, a cutting region 36 is formed, the blades 10 and 12 being substantially arranged in the cutting region 36. It is to be seen from Figs. 4-6 that the blades 10 of the upper knife 8 are located in a spaced apart manner with a division 37 (also called separation or spacing) and that the blades 12 of the lower knife 9 are located in a spaced apart manner with a division 38. The blades 10 and 12 are thus arranged with different divisions 37 and 38. This may also be seen from the coverage illustrated in Fig. 4. This arrangement serves to support the blades 10 and 12 on one another with a great surface coverage at all times to prevent and limit, respectively, bending or a slight movement of the blades 10, 12 into the intermediate spaces between the blades of the respective other knife. For example, the division 37 may be approximately 70 mm and the division 38 may be approximately 84 mm.

In the exemplary embodiments of Figs. 4-6, the blades 10 and 12 of the upper knife 8 and of the lower knife 9 of the knives set 7 have an approximately triangular shape. The blades 10 and 12 in their portions facing the front and the sides, respectively, include cutting facets 39, 40. The cutting facets 39 and 40 are located to be declined with respect to the horizontal plane 16 in a way that their angle of declination determines the value of the pressing force with which the blades 10 and 12 are pressed towards one another during cutting. A remaining pressing force usually being low may be realized by respective pressure of the guiding elements 27 and 28. The cutting facets 39 and 40 are designed to include teeth, as this is especially to be seen in Fig. 5. Such toothing is preferred for the cutting contact to the material to be cut 2. The toothing engages the material to be cut 2 such that the tendency of the material to be cut 2 to be deflected towards the front during cutting does not occur. Due to the toothed design of the cutting portions of the blades 10, 12, one also attains the advantage of an increased local surface pressure with respect to the surface of the stalk to be cut and thus easy entrance into the material to be cut 2.

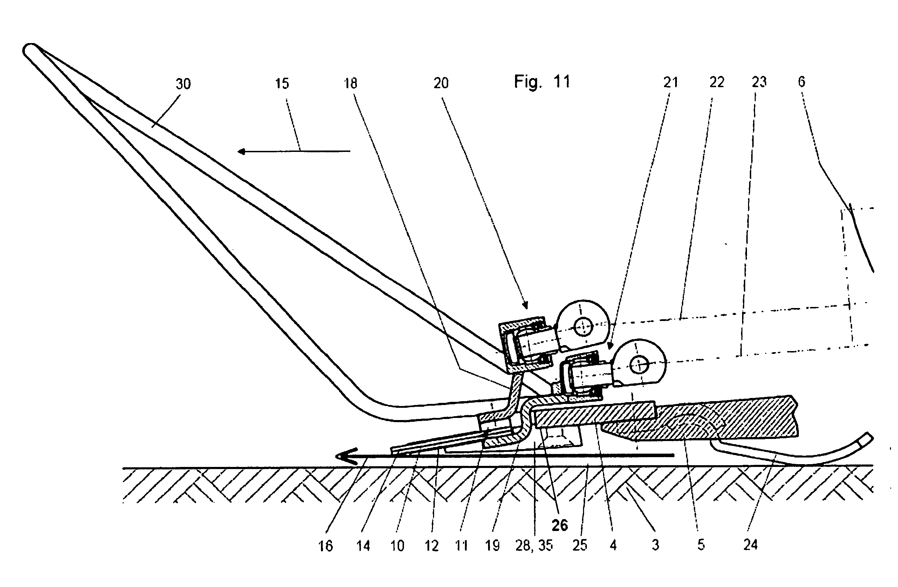

Figs. 8-11 illustrate sectional views and thus clarify the relative arrangement of the elements of the cutting tool 1 with respect to one another. It is to be especially seen that the free space 25 below the horizontal plane 16 is kept free from any elements within the working width 34 and the cutting region 36.

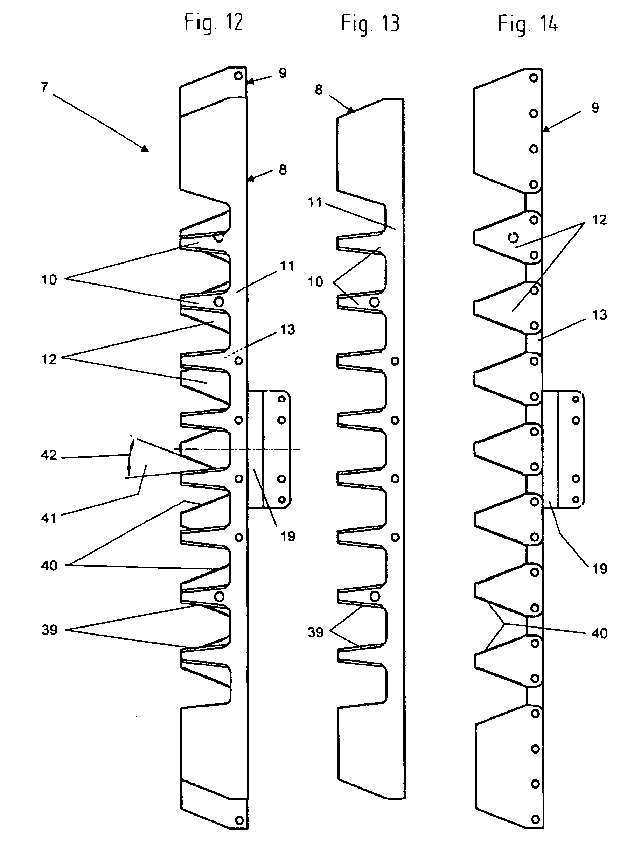

Figs. 12-14 illustrate another exemplary embodiment of the novel cutting tool 1. Fig. 12 illustrates the knives set 7 including the upper knife 8 and the lower knife 9. It is to be seen in Fig. 13 that the upper knife 8 is made of one piece of material such that the blades 10 and the knife back 11 are also designed as one piece. Fig. 14 illustrates the design of the lower knife 9 in which the blades 12 are fixedly located on the knife 13 in a usual way by rivets. It is to be understood that the lower knife 9 could also be designed as one piece, as this has been illustrated with respect to the upper knife according to Fig. 13. It is not necessarily required that the upper knife 8 as well as the lower knife 9 at the blades 10 and 12, respectively, include cutting facets 39 and 40, respectively. In a simplified exemplary embodiment, the upper knife 8 or the lower knife 9 being designed as one piece may also be designed as punched elements not including declined cutting facets 39 and 40, respectively.

In accordance with the different divisions 37 and 38 of the blades 10 and 12, there are angled cutting wedges 41 having an angle 42 being in a range of approximately 30° or less. It is desired to attain a self-locking effect resulting in the tendency of the material to be cut 2 being pressed from the cutting wedge 41 towards the front instead of cutting is reduced and eliminated, respectively.

### LIST OF REFERENCE NUMERALS

- 1: cutting tool
- 2: material to be cut
- 3: ground
- 4: bar back
- 5: connecting unit
- 6: wheel
- 7: knives set
- 8: upper knife
- 9: lower knife
- 10: blade
- 11: knife back
- 12: blade
- 13: knife back
- 14: cutting portion
- 15: arrow
- 16: horizontal plane
- 17: remaining stalk
- 18: driving element
- 19: driving element
- 20: joint
- 21: joint
- 22: pivot lever
- 23: pivot lever
- 24: sliding shoe
- 25: free space
- 26: lower edge
- 27: guiding element
- 28: guiding element
- 29: guiding portion
- 30: guiding strap
- 31: arrow
- 32: longitudinal center plane
- 33: width
- 34: working width
- 35: friction bearing
- 36: cutting region
- 37: division
- 38: division
- 39: cutting facette
- 40: cutting facette
- 41: cutting wedge
- 42: angle

## Claims

1. A cutting tool for cutting plants including stalks, comprising:
a bar, said bar having a lower edge and being designed and arranged to substantially extend over a working width of said cutting tool;
a knives set, said knives set being arranged on said bar, said knives set including
an upper knife unit, said upper knife unit including a plurality of blades, said blades including a cutting portion, said upper knife unit being designed and arranged to be downwardly declined towards said cutting portion, and
a lower knife unit, said lower knife unit including a plurality of blades, said blades including a cutting portion, said lower knife unit being designed and arranged to be downwardly declined towards said cutting portion;
a plurality of driving elements, said driving elements having a lower edge and being designed and arranged to drive said blades to reciprocate in opposite directions within a cutting region;
a plurality of guiding elements, said guiding elements being designed and arranged to connect said upper knife unit and said lower knife unit to said bar,
said cutting portions of said blades of said upper knife unit and said lower knife unit in a working position of said cutting tool being located at least as low as said lower edge of said bar and said lower edge of said driving elements such that there is a free space being located within the cutting region.

2. The cutting tool of claim 1, wherein said blades of said upper knife unit are arranged at a first division and said blades of said lower knife unit are arranged at a second division, said first and second division being different.

3. The cutting tool of claim 1, further comprising
a plurality of guiding straps, said guiding straps being located at both sides of said cutting tool and each defining a width of a guiding portion, said guiding elements of said lower knife unit substantially being arranged in the guiding portions, the sum of the widths of said cutting region and of said two guiding portions defining a width of said cutting tool.

4. The cutting tool of claim 1, wherein said blades of said upper knife unit and/or said blades of said lower knife unit include declined cutting facets, said declined cutting facets being designed and arranged to press said blades of said upper knife unit and said blades of said lower knife unit towards one another when cutting the material to be cut.

5. The cutting tool of claim 1, wherein said blades of said upper knife unit and/or said blades of said lower knife include teeth.

6. The cutting tool of claim 1, wherein said blades of said upper knife unit and/or said blades of said lower knife unit have an outer shape such that there are cutting wedges having an angle of approximately 30° at most.

7. The cutting tool of claim 1, wherein
said upper knife unit further includes a knife support, said blades of said upper knife unit being designed as one piece with said knife support; and/or
said lower knife unit further includes a knife support, said blades of said lower knife unit being designed as one piece with said knife support.

8. The cutting tool of claim 1, wherein said driving elements and said guiding elements being associated with said lower knife unit are located at a higher position than the cutting portions of said blades in the working position of said cutting tool.

9. The cutting tool of claim 1, further comprising a plurality of sliding shoes, said sliding shoes being arranged in the guiding portions and being designed and arranged to support said bar by contacting the ground.

10. The cutting tool of claim 1, wherein three guiding elements are located in each of the guiding portions, said guiding elements being arranged on said bar such that the cutting portion of said knives set is maintained in a clamped position.

11. The cutting tool of claim 10, wherein two of said guiding elements are located on said upper knife unit and one of said guiding elements is located on said lower knife unit.

12. The cutting tool of claim 1, wherein said free space does not include any elements selected from the group consisting of driving elements, guiding elements, connecting units and said bar.

## Patentansprüche

1. Schneidwerk zum Schneiden von Stängel aufweisenden Pflanzen, mit:
einem Balken, wobei der Balken eine Unterkante aufweist und so ausgebildet und angeordnet ist, dass er sich im Wesentlichen über eine Arbeitsbreite des Schneidwerks erstreckt;
einem Messersatz, wobei der Messersatz auf dem Balken angeordnet ist, wobei der Messersatz folgendes aufweist
eine Obermessereinheit, wobei die Obermessereinheit eine Mehrzahl von Klingen aufweist, wobei die Klingen einen schneidenden Bereich aufweisen, wobei die Obermessereinheit so ausgebildet und angeordnet ist, dass sie in Richtung des schneidenden Bereichs nach unten geneigt ist, und
eine Untermessereinheit, wobei die Untermessereinheit eine Mehrzahl von Klingen aufweist, wobei die Klingen einen schneidenden Bereich aufweisen, wobei die Untermessereinheit so ausgebildet und angeordnet ist, dass sie in Richtung des schneidenden Bereichs nach unten geneigt ist;
einer Mehrzahl von Antriebselementen, wobei die Antriebselemente eine Unterkante aufweisen und so ausgebildet und angeordnet sind, dass sie die Klingen in einem Schnittbereich gegenläufig hin- und hergehend antreiben;
einer Mehrzahl von Führungselementen, wobei die Führungselemente so ausgebildet und angeordnet sind, dass sie die Obermessereinheit und die Untermessereinheit mit dem Balken verbinden,
wobei die schneidenden Bereiche der Klingen der Obermessereinheit und der Untermessereinheit in einer Arbeitsstellung des Schneidwerks zumindest gleich tief wie die Unterkante des Balkens und die Unterkante der Antriebselemente angeordnet sind, so dass ein Freiraum unterhalb des Schnittbereichs existiert.

2. Schneidwerk nach Anspruch 1, wobei die Klingen der Obermessereinheit in einer ersten Teilung und die Klingen der Untermessereinheit in einer zweiten Teilung angeordnet sind, wobei sich die erste und zweite Teilung unterscheiden.

3. Schneidwerk nach Anspruch 1, weiterhin mit
einer Mehrzahl von Führungsbügeln, wobei die Führungsbügel zu beiden Seiten des Schneidwerks angeordnet sind und jeweils eine Breite eines Führungsbereichs definieren, wobei die Führungselemente der Untermessereinheit im Wesentlichen in den Führungsbereichen angeordnet sind, wobei die Summe der Breiten des Schnittbereichs und der zwei Führungsbereiche eine Breite des Schneidwerks definiert.

4. Schneidwerk nach Anspruch 1, wobei die Klingen der Obermessereinheit und/oder die Klingen der Untermessereinheit geneigt angeordnete Schneidwarten aufweisen, wobei die geneigt angeordneten Schneidwarten so ausgebildet und angeordnet sind, dass die Klingen der Obermessereinheit und die Klingen der Untermessereinheit während des Abschneidens des Schnittguts aneinander angepresst werden.

5. Schneidwerk nach Anspruch 1, wobei die Klingen der Obermessereinheit und/oder die Klingen des Untermessers Zähne aufweisen.

6. Schneidwerk nach Anspruch 1, wobei die Klingen der Obermessereinheit und/oder die Klingen der Untermessereinheit eine solche Umrissgestaltung aufweisen, dass sich Schnittkeile mit einem Winkel von maximal etwa 30° ergeben.

7. Schneidwerk nach Anspruch 1, wobei
die Obermessereinheit weiterhin einen Messerrücken aufweist, wobei die Klingen der Obermessereinheit und der Messerrücken einteilig ausgebildet sind; und/oder
die Untermessereinheit weiterhin einen Messerrücken aufweist, wobei die Klingen der Untermessereinheit und der Messerrücken einteilig ausgebildet sind.

8. Schneidwerk nach Anspruch 1, wobei die der Untermessereinheit zugeordneten Antriebselemente und Führungselemente höher angeordnet sind als die schneidenden Bereiche der Klingen in der Arbeitsstellung des Schneidwerks.

9. Schneidwerk nach Anspruch 1, weiterhin mit einer Mehrzahl von Gleitschuhen, wobei die Gleitschuhe in den Führungsbereichen angeordnet und so ausgebildet und angeordnet sind, dass sie den Balken durch Kontaktierung des Bodens abstützen.

10. Schneidwerk nach Anspruch 1, wobei drei Führungselemente in jedem der Führungsbereiche angeordnet sind, wobei die Führungselemente so auf dem Balken angeordnet sind, dass der Schnittbereich des Messersatzes eingespannt gehalten wird.

11. Schneidwerk nach Anspruch 10, wobei zwei der Führungselemente auf der Obermessereinheit angeordnet sind und eines der Führungselemente auf der Untermessereinheit angeordnet ist.

12. Schneidwerk nach Anspruch 1, wobei der Freiraum keine Elemente aus der aus Antriebselementen, Führungselementen, Verbindungselementen und dem Balken bestehenden Gruppe aufweist.

## Revendications

1. Outil de coupe pour couper des plantes comprenant des tiges, comprenant:
une barre, ladite barre ayant un bord inférieur et étant conçue et agencée pour s'étendre sensiblement sur une largeur de travail dudit outil de coupe;
un ensemble de couteaux, ledit ensemble de couteaux étant agencé sur ladite barre, ledit ensemble de couteaux comprenant:
une unité de couteau supérieure, ladite unité de couteau supérieure comprenant une pluralité de lames, lesdites lames comprenant une partie de coupe, ladite unité de couteau supérieure étant agencée et conçue pour être inclinée vers le bas vers ladite partie de coupe, et
une unité de couteau inférieure, ladite unité de couteau inférieure comprenant une pluralité de lames, lesdites lames comprenant une partie de coupe, ladite unité de couteau inférieure étant conçue et agencée pour être inclinée vers le bas vers ladite partie de coupe;
une pluralité d'éléments d'entraînement, lesdits éléments d'entraînement ayant un bord inférieur et étant conçus et agencés pour entraîner lesdites lames afin d'effectuer un mouvement de va-et-vient dans des directions opposées à l'intérieur d'une région de coupe;
une pluralité d'éléments de guidage, lesdits éléments de guidage étant conçus et agencés pour raccorder ladite unité de couteau supérieure et ladite unité de couteau inférieure à ladite barre,
lesdites parties de coupe desdites lames de ladite unité de couteau supérieure et de ladite unité de couteau inférieure dans une position de travail dudit outil de coupe étant positionnées au moins aussi bas que ledit bord inférieur de ladite lame et ledit bord inférieur desdits éléments d'entraînement sont tels qu'il existe un espace libre qui est situé à l'intérieur de la région de coupe.

2. Outil de coupe selon la revendication 1, dans lequel lesdites lames de ladite unité de couteau supérieure sont agencées dans une première division et lesdites lames de ladite unité de couteau inférieure sont agencées dans une deuxième division, lesdites première et deuxième divisions étant différentes.

3. Outil de coupe selon la revendication 1, comprenant en outre:
une pluralité de sangles de guidage, lesdites sangles de guidage étant positionnées des deux côtés dudit outil de coupe, et définissant chacune une largeur d'une partie de guidage, lesdits éléments de guidage de ladite unité de couteau inférieure étant sensiblement agencés dans les parties de guidage, la somme des largeurs de ladite unité de coupe et desdites deux parties de guidage définissant une largeur dudit outil de coupe.

4. Outil de coupe selon la revendication 1, dans lequel lesdites lames de ladite unité de couteau supérieure et/ou lesdites lames de ladite unité de couteau inférieure comprennent des facettes de coupe inclinées, lesdites facettes de coupe inclinées étant conçues et agencées pour comprimer lesdites lames de ladite unité de couteau supérieure et lesdites lames de ladite unité de couteau inférieure les unes vers les autres lorsque l'on coupe le matériau à couper.

5. Outil de coupe selon la revendication 1, dans lequel lesdites lames de ladite unité de couteau supérieure et/ou lesdites lames de ladite unité de couteau inférieure comprennent des dents.

6. Outil de coupe selon la revendication 1, dans lequel lesdites dents de ladite unité de couteau supérieure et/ou lesdites lames de ladite unité de couteau inférieure ont une forme externe de sorte qu'il existe des cales de coupe qui ont un angle d'approximativement 30° au maximum.

7. Outil de coupe selon la revendication 1, dans lequel:
ladite unité de couteau supérieure comprend en outre un support de couteau, lesdites lames de ladite unité de couteau supérieure étant conçues d'un seul tenant avec ledit support de couteau; et/ou
ladite unité de couteau inférieure comprend en outre un support de couteau, lesdites lames de ladite unité de couteau inférieure étant conçues d'un seul tenant avec ledit support de couteau.

8. Outil de coupe selon la revendication 1, dans lequel lesdits éléments d'entraînement et lesdits éléments de guidage qui sont associés à ladite unité de couteau inférieure sont positionnés dans une position plus haute que les parties de coupe desdites lames dans la position de travail dudit outil de coupe.

9. Outil de coupe selon la revendication 1, comprenant en outre une pluralité de patins coulissants, lesdits patins coulissants étant agencés dans les parties de guidage et étant conçus et agencés pour supporter ladite barre en contact avec le sol.

10. Outil de coupe selon la revendication 1, dans lequel trois éléments de guidage sont positionnés dans chacune des parties de guidage, lesdits éléments de guidage étant agencés sur ladite barre de sorte que la partie de coupe desdits ensembles de couteau est maintenue dans une position serrée.

11. Outil de coupe selon la revendication 10, dans lequel deux desdits éléments de guidage sont positionnés sur ladite unité de couteau supérieure et l'un desdits éléments de guidage est positionné sur ladite unité de couteau inférieure.

12. Outil de coupe selon la revendication 1, dans lequel ledit espace libre ne comprend pas d'éléments choisis dans le groupe comprenant les éléments d'entraînement, les éléments de guidage, les unités de raccordement et ladite barre.
